# EUROPÄISCHE PATENTANMELDUNG

(11) **EP 1 914 569 A2**
(43) Veröffentlichungstag der Anmeldung: **23.04.2008**
(21) Anmeldenummer: 07019859.3
(22) Anmeldetag: 10.10.2007
(51) Int. Cl.: G01V 3/20

(54) **Tomographieanordnung zur elektrischen Widerstandstomographie in einem Bohrloch**

(30) Priorität: 20.10.2006 DE 102006049554
(71) Anmelder: GeoForschungsZentrum Potsdam Stiftung des Öffentlichen Rechts Telegrafenberg, 14473 Potsdam (DE)
(72) Erfinder: Schütt, Hartmut, 10825 Berlin (DE); Krüger, Kay, 14469 Potsdam (DE); Töpfer, Martin, 14478 Potsdam (DE); Borm, Günter, 76227 Karlsruhe (DE)
(74) Vertreter: Beier, Ralph

(57) **Zusammenfassung**

Die Erfindung betrifft eine Tomographieanordnung zur elektrischen Widerstandstomographie in einem Bohrloch (1, 2), mit einer Bohrlochverrohrung (7), die aus einem elektrisch leitenden Material besteht und zur Auskleidung des Bohrlochs (1, 2) dient. Die Erfindung sieht mehrere Tomographieelektroden (10, 11) zur Stromeinspeisung in die Bohrlochumgebung oder zur Spannungsmessung aus der Bohrlochumgebung vor, wobei die Tomographieelektroden (10, 11) an der Bohrlochverrohrung (7) angebracht sind. Weiterhin sieht die Erfindung eine Isolationsschicht (9) vor, die auf die Bohrlochverrohrung (7) aufgebracht ist und die Bohrlochverrohrung (7) elektrisch gegenüber den Tomographieelektroden (10, 11) isoliert. Ferner umfasst die Erfindung vorteilhafte Verwendungen einer derartigen Tomographieanordnung sowie ein Herstellungs- und Betriebsverfahren.

## Beschreibung

Die Erfindung betrifft eine Tomographieanordnung zur elektrischen Widerstandstomographie in einem Bohrloch. Weiterhin betrifft die Erfindung besondere Verwendungen einer derartigen Tomographieanordnung. Schließlich umfasst die Erfindung auch ein neues Verfahren zur Herstellung bzw. zum Betrieb einer derartigen Tomographieanordnung.

Seit mehreren Jahrzehnten sind widerstands-geoelektrische Messverfahren bekannt, mit denen das Erdreich unterhalb der Erdoberfläche untersucht werden kann. Hierbei wird im allgemeinen über zwei Elektroden an der Erdoberfläche ein Strom in das Erdreich eingespeist. Dadurch entsteht in dem Erdreich unterhalb der Erdoberfläche eine elektrische Potenzialverteilung, die von der Verteilung des spezifischen Widerstands im Erdreich abhängt. Zwei weitere Elektroden an der Erdoberfläche messen dann eine Potenzialdifferenz, die von dem eingespeisten Strom und der räumlichen Verteilung des spezifischen Widerstands im Erdreich abhängt. Aus dem eingespeisten Strom und der gemessenen Potenzialdifferenz sowie einem Konfigurationsfaktor kann dann für die vorgegebene Elektrodenkonfiguration ein scheinbarer spezifischer Widerstand des Erdreichs ermittelt werden, wobei sich der Konfigurationsparameter aus den Relativpositionen der vier Elektroden berechnen lässt. Dieser scheinbare spezifische Widerstand repräsentiert den spezifischen Widerstand eines homogenen Halbraums, der für dieselbe Elektrodenkonfiguration das gleiche Spannungs-/Stromverhältnis liefern würde wie der tatsächliche (inhomogene) Halbraum. Bei sehr geringen Elektrodenabständen umfasst diese geoelektrische Messung nur die Bereiche in der unmittelbaren Umgebung der Elektroden, d.h. nur die Deckschicht des Erdreichs. Bei einem größeren Abstand der Einspeiseelektroden dringt jedoch ein immer größerer Teil des eingespeisten Stroms in tiefere Bereiche des Erdreichs ein, was eine geoelektrische Tiefensondierung des Erdreichs ermöglicht. Wird die gesamte 4-Elektroden-Anordnüng dagegen unter Beibehaltung der Relativposition der Elektroden entlang eines Profils versetzt, so werden hauptsächlich laterale Variationen des spezifischen Widerstands in dem Erdreich erfasst, was eine geoelektrische Kartierung des Erdreichs ermöglicht. Grundsätzlich lässt sich die Verteilung des spezifischen Widerstands im Untergrund aus einer hinreichenden Anzahl von scheinbaren spezifischen Widerständen für verschiedene Elektrodenkonfigurationen ermitteln, wobei das räumliche Auflösungsvermögen dieser geoelektrischen Messung durch das geoelektrische Äquivalenzprinzip und durch unvermeidbare Messungenauigkeiten begrenzt ist.

Weiterhin wird zur Untersuchung des Erdreichs unterhalb der Erdoberfläche seit einiger Zeit auch die sogenannte Oberflächen-ERT (ERT : Electrical Resistivity Tomography) eingesetzt, wobei es sich um eine geoelektrische Widerstandstomographie handelt. Hierbei kann an der Erdoberfläche ein zweidimensionales Elektrodenarray mit einer Vielzahl von Messelektroden angeordnet sein, wobei die Elektroden entsprechend vielen unterschiedlichen 4-Elektroden-Konfigurationen geschaltet werden können, um Messergebnisse zu liefern. Die auf diese Weise gewonnenen widerstands-geoelektrischen Datensätze können dann mit Hilfe von dreidimensionalen Modellen durch Vorwärtsmodellierung und Dateninversion interpretiert werden, so dass als Ergebnis Tomogramme, des Erdreichs entstehen, also Schnittbilder, welche die Verteilung des spezifischen Widerstands im Untergrund auf ausgewählten Ebenen darstellen.

Darüber hinaus ist die sogenannten Bohrloch-ERT bekannt, bei der die Einspeise- bzw. Messelektroden nicht - wie bei der vorstehend erwähnten Oberflächen-ERT - an der Erdoberfläche angeordnet sind, sondern in einem Bohrloch in unterschiedlichen Tiefen. Die Bohrloch-ERT ermöglicht bei einer Untersuchung des Erdreichs in größeren Tiefen eine wesentlich größere vertikale Ortsauflösung als die Oberflächen-ERT, was insbesondere bei der Exploration von Lagerstätten fossiler Brennstoffe wichtig ist. Ein weiterer Vorteil der Bohrloch-ERT gegenüber der Oberflächen-ERT besteht darin, dass die Messung durch oberflächennahe Störsignale weniger stark verfälscht wird, da diese mit der Tiefe relativ schnell abklingen. Darüber hinaus weisen die bei der Bohrloch-ERT verwendeten dauerhaft installierten Elektroden normalerweise immer die gleiche elektrische Ankopplung an das umgebende Erdreich auf, wohingegen die elektrische Ankopplung bei den bei der Oberflächen-ERT verwendeten Elektroden schwanken kann. Ferner ermöglichen die bei der Bohrloch-ERT verwendeten dauerhaft installierten Elektroden eine hohe Reproduzierbarkeit der Messung über lange Zeiträume hinweg.

Die Durchführung der Bohrloch-ERT ist in der Regel unproblematisch bei flachen Bohrungen mit einer geringen Bohrtiefe, wie sie im Umweltmonitorring oft anzutreffen sind. Dabei kann nämlich eine Bohrlochverrohrung eingesetzt werden, die aus einem elektrisch nicht leitenden Kunststoff besteht. Die Einspeise- und Messelektroden für die Bohrloch-ERT können deshalb einfach auf die aus Kunststoff bestehende Bohrlochverrohrung aufgebracht werden.

Bei tieferen Bohrungen ist die Verwendung von Bohrlochverrohrungen aus Kunststoff dagegen aus Stabilitätsgründen nicht möglich. Stattdessen werden dann Bohrlochverrohrungen aus Stahl eingesetzt, was die Implementierung der Einspeise- bzw. Messelektroden für die Bohrloch-ERT erschwert, da die Bohrlochverschraubung dann elektrisch leitfähig ist.

Aus US 5 914 603 ist die sogenannte Long-Electrode-ERT (LEERT) bekannt, bei der die elektrisch leitfähige Bohrlochverrohrung aus Stahl als Einzelelektrode eingesetzt wird. Nachteilig an der LEERT ist jedoch die Tatsache, dass die vertikale Ortsauflösung völlig verloren geht.

Aus US 6 088 655 ist eine andere Variante der Bohrloch-ERT bekannt, bei der die Einspeise- bzw. Messelektroden innerhalb der aus elektrisch leitfähigem Stahl bestehenden Bohrlochverschraubung angeordnet sind. Die elektrisch leitfähige Bohrlochverschraubung bildet hierbei zwar eine elektrische Abschirmung für die Einspeise- bzw. Messelektroden der Bohrloch-ERT, jedoch wirkt diese Abschirmung aufgrund der endlichen elektrischen Leitfähigkeit der aus Stahl bestehenden Bohrlochverschraubung nicht vollständig. Nachteilig an dieser Variante der Bohrloch-ERT ist zum einen die geringe Messempfindlichkeit gegenüber Widerstands-Inhomogenitäten außerhalb der Bohrlochverschraubung. Zum anderen stellt diese Variante der Bohrloch-ERT hohe Anforderungen an die Messtechnik, um trotz der elektrischen Abschirmung durch die aus Stahl bestehende Bohrlochverschraubung befriedigende Messergebnisse zu erzielen.

Der Erfindung liegt deshalb die Aufgabe zugrunde, die vorstehend beschriebenen bekannten Techniken der Bohrloch-ERT zu verbessern.

Diese Aufgabe wird durch eine erfindungsgemäße Tomographieanordnung gemäß dem Hauptanspruch gelöst.

Die Erfindung umfasst die allgemeine technische Lehre, eine Bohrlochverschraubung aus einem elektrisch leitenden Material (z.B. Stahl) mit einer Isolationsschicht zu überziehen, auf der die Tomographieelektroden (Einspeise- bzw. Messelektroden) angeordnet sind, so dass die Tomographieelektroden gegenüber der Bohrlochverschraubung elektrisch isoliert sind.

Zum einen ermöglicht eine derartige Bohrlochverschraubung eine Vielzahl von elektrisch gegeneinander isolierten Tomographieelektroden in unterschiedlichen Bohrlochtiefen, was eine Messung mit einer hohen vertikalen Ortsauflösung ermöglicht. Die Erfindung unterscheidet sich also vorteilhaft von der eingangs erwähnten Long-Electrode-ERT, bei der die Bohrlochverschraubung nur eine einzige Tomographieelektrode bildet, was keine vertikale Ortsauflösung bei der Messung erlaubt.

Zum anderen ermöglicht die erfindungsgemäße Tomographieanordnung auch den Einsatz in tiefen Bohrlöchern, die eine stabile, aus Stahl bestehende Bohrlochverrohrung erfordern. Die Erfindung unterscheidet sich also auch vorteilhaft von der eingangs erwähnten Bohrloch-ERT für flache Bohrungen im Umweltmonitorring, bei der wegen der geringen Bohrtiefen eine Bohrlochverrohrung aus Kunststoff eingesetzt wird.

Vorzugsweise sind die Tomographieelektroden und die Isolationsschicht bei der erfindungsgemäßen Tomographieanordnung an der Außenseite der Bohrlochverrohrung angeordnet. Dies ist vorteilhaft, weil die elektrisch leitfähige Bohrlochverrohrung die Messung dann nicht abschirmt.

In einem bevorzugten Ausführungsbeispiel der Erfindung sind mehrere Tomographieelektroden in Längsrichtung der Bohrlochverrohrung verteilt an unterschiedlichen Stellen angeordnet, die unterschiedlichen Bohrlochtiefen entsprechen. Diese Anordnung der Tomographieelektroden in verschiedenen Bohrlochtiefen ermöglich vorteilhaft eine hohe vertikale Ortsauflösung bei der Messung.

Die benachbarten Tomographieelektroden weisen hierbei in Längsrichtung der Bohrlochverrohrung, d.h. in vertikaler Richtung, einen vorgegebenen Elektrodenabstand zueinander auf, wobei sich die zwischen den Tomographieelektroden und der Bohrlochverrohrung befindliche Isolationsschicht in Längsrichtung der Bohrlochverrohrung zumindest von der obersten Tomographieelektrode bis zu der untersten Tomographieelektrode erstreckt, damit sämtliche Tomographieelektroden gegenüber der elektrisch leitfähigen Bohrlochverrohrung isoliert sind.

Vorzugsweise erstreckt sich die Isolationsschicht hierbei nach oben nicht nur bis zu der obersten Tomographieelektrode, sondern um eine vorgegebene Zusatzlänge darüber hinaus. In gleicher Weise erstreckt sich die Isolationsschicht vorzugsweise nach unten hin mindestens um eine vorgegebene Zusatzlänge bis unter die unterste Tomographieelektrode. Modellrechnungen der Erfinder haben ergeben, dass die Zusatzlänge der Isolationsschicht mindestens so groß sein sollte wie der doppelte Elektrodenabstand. Beispielsweise ergibt sich bei 15 Tomographieelektroden mit einem Elektrodenabstand von 10 Metern eine vertikale Länge der Elektrodenanordnung von 140 Meter und eine vertikale Lange der Isolationsschicht von 180 Metern.

Bei der erfindungsgemäßen Tomographieanordnung sind die Tomographieelektroden vorzugsweise im Wesentlichen punktförmig, um eine hohe vertikale Ortsauflösung bei der Messung zu erreichen, wodurch sich die Erfindung von der eingangs erwähnten LEERT unterscheidet, die keine befriedigende vertikale Ortsauflösung bei der Messung erlaubt. Der im Rahmen der Erfindung verwendete Begriff von punktförmigen Tomographieelektroden ist jedoch nicht im exakt mathematischen Sinne zu verstehen, sondern stellt vorzugsweise darauf ab, dass die Tomographieelektroden eine wesentlich geringere vertikale Ausdehnung aufweisen als die Bohrlochverrohrung selbst.

Weiterhin ist zu erwähnen, dass die Erfindung nicht auf Bohrlochverrohrungen aus Stahl beschränkt ist, wie sie derzeit eingesetzt werden. Vielmehr ist der erfindungsgemäße Gedanke einer Isolation der Bohrlochverrohrung auch vorteilhaft, wenn die Bohrlochverrohrung aus anderen elektrisch leitfähigen Materialien besteht.

Wichtig für die praktische Realisierung der erfindungsgemäßen Tomographieanordnung ist, dass die Isolationsschicht mechanisch stark belastbar ist und gut an der Bohrlochverrohrung anhaftet, um die mechanischen Belastungen beim Einbau in die Bohrung unbeschadet zu überstehen. Darüber hinaus sollte die Isolationsschicht auch abriebfest, korrosionsbeständig und hitzebeständig sein. Die Isolationsschicht wird deshalb vorzugsweise aus einem Polyphenylensulfid-haltigen Material hergestellt, wie beispielsweise Ryt-Wrap® der Firma Vetco. Die Erfindung ist jedoch nicht auf bestimmte Materialien für die Isolationsschicht beschränkt, sondern grundsätzlich auch mit anderen Materialien realisierbar.

Weiterhin ist zu erwähnen, dass vorzugsweise eine dünne Isolationsschicht auf die Bohrlochverschraubung aufgebracht wird, wobei die Isolationsschicht beispielsweise eine Schichtdicke im Bereich zwischen 0,5 mm und 3 mm aufweisen kann. Die Erfindung ist jedoch hinsichtlich der Schichtdicke der Isolationsschicht nicht auf den vorstehend genannten Wertebereich beschränkt, sondern grundsätzlich auch mit dickeren oder dünneren Isolationsschichten realisierbar, solange die Isolationsschicht die gewünschte Isolationswirkung zwischen den Tomographieelektroden und der elektrisch leitfähigen Bohrlochverrohrung sicherstellt.

Ferner ist zu erwähnen, dass die Tomographieelektroden an der Bohrlochverrohrung vorzugsweise an Stellen angeordnet sind, die unterschiedlichen Bohrlochtiefen entsprechen. Beispielsweise können die Tomographieelektroden im montierten Zustand in Bohrlochtiefen knapp unterhalb der Erdoberfläche bis zu Bohrlochtiefen von mehr als 100 m, 500 m, 1000 m oder sogar mehreren Kilometern angeordnet sein.

Weiterhin ist zu erwähnen, dass die Bohrlochverrohrung mit den implementierten Tomographieelektroden in dem Bohrloch vorzugsweise permanent angeordnet ist, was durch Einzementieren der Bohrlochverrohrung in dem Bohrloch erreicht werden kann.

Die Erfindung umfasst jedoch nicht nur die vorstehend beschriebene erfindungsgemäße Tomographieanordnung, sondern auch vorteilhafte Verwendungen einer derartigen Tomographieanordnung beispielsweise zur Überwachung eines unterirdischen Speichers (z.B. ein saliner Aquifer) im Erdreich beim einspeichern eines Fluids (z.B. Kohlendioxid). Hierzu werden in der räumlichen Umgebung des unterirdischen Speichers mehrere Bohrlöcher in das Erdreich eingebracht, in denen dann die erfindungsgemäße Tomographieanordnung einzementiert wird. Die eingangs beschriebene Bohrloch-ERT ermöglicht dann eine Messung des Fluidgehalts in dem unterirdischen Speicher (z.B. hochporöses Gestein), da der Fluidgehalt den spezifischen elektrischen Widerstand beeinflusst.

Eine andere vorteilhafte Verwendung der erfindungsgemäßen Tomographieanordnung ist die Exploration von Lagerstätten von Rohstoffen, insbesondere fossiler Brennstoffe wie Erdöl oder Erdgas. So ermöglicht die erfindungsgemäße Bohrloch-ERT die Unterscheidung von Kohlenwasserstoffen (z.B. Erdöl, Erdgas) von salinen Porenwässern, die in größerer Tiefe weit verbreitet sind.

Eine weitere vorteilhafte Verwendung der erfindungsgemäßen Tomographieanordnung ist die Überwachung einer EOR-Maßnahme (EOR : Enhanced Oil Recovery) in einem Ölfeld. Dabei werden Fremdsubstanzen, wie beispielsweise Gas, Wasser, Heißdampf sowie geeignete Chemikalien, in ein Ölreservoir eingepresst, um die Gleitfähigkeit des Öls und damit die Förderrate zu erhöhen. Die an sich bekannten EOR-Maßnahmen ermöglichen also eine Erhöhung des Ausbeutefaktors eines Ölfelds. Die Überwachung der EOR-Maßnahmen durch eine Bohrloch-ERT ermöglicht hierbei eine Unterscheidung zwischen dem zu fördernden fossilen Brennstoff (z.B. Erdöl) und den eingepressten Fremdstoffen (z.B. Dampf).

Schließlich umfasst die Erfindung auch ein Verfahren zur Herstellung bzw. zum Betrieb einer erfindungsgemäßen Tomographieanordnung, wie sich bereits aus der vorstehenden Beschreibung ergibt.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Querschnittsansicht durch einen Untergrund mit zwei Bohrlöchern zur Durchführung der Bohrloch-ERT sowie
- Figur 2: eine Längsschnittansicht einer erfindungsgemäßen Bohrlochverrohrung zum Einsatz bei der Bohrloch-ERT gemäß Figur 1.

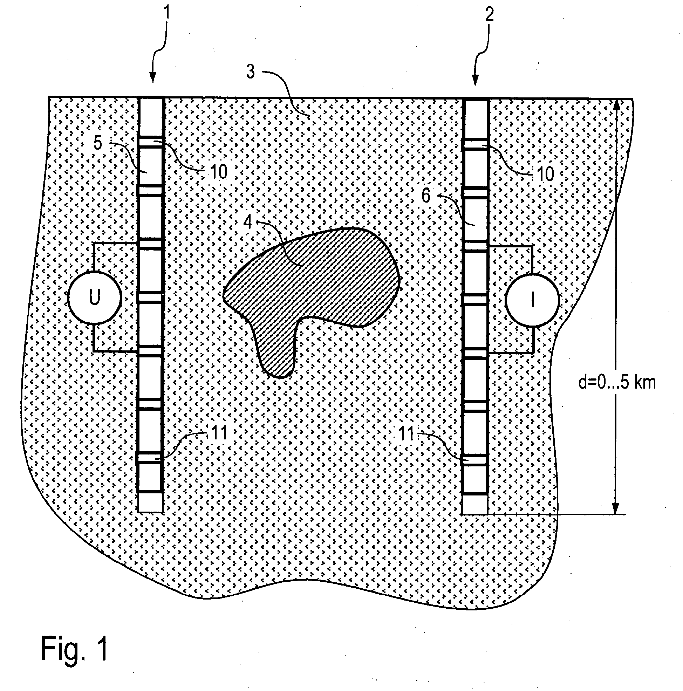

Die in Figur 1 gezeichnete Querschnittsansicht zeigt zwei Bohrlöcher 1, 2 in einem Untergrund 3, wobei die beiden Bohrlöcher 1, 2 eine Tiefe d von mehreren Kilometern aufweisen können.

In dem Untergrund 3 ist hierbei ein unterirdischer Speicher 4 angeordnet, der in diesem Beispiel durch einen salinen Aquifer gebildet wird und zur Einspeicherung von Kohlendioxid dient. Die Einspeicherung des Kohlendioxids in den Speicher 4 ist hierbei zur Vereinfachung nicht dargestellt und kann in herkömmlicher Weise erfolgen.

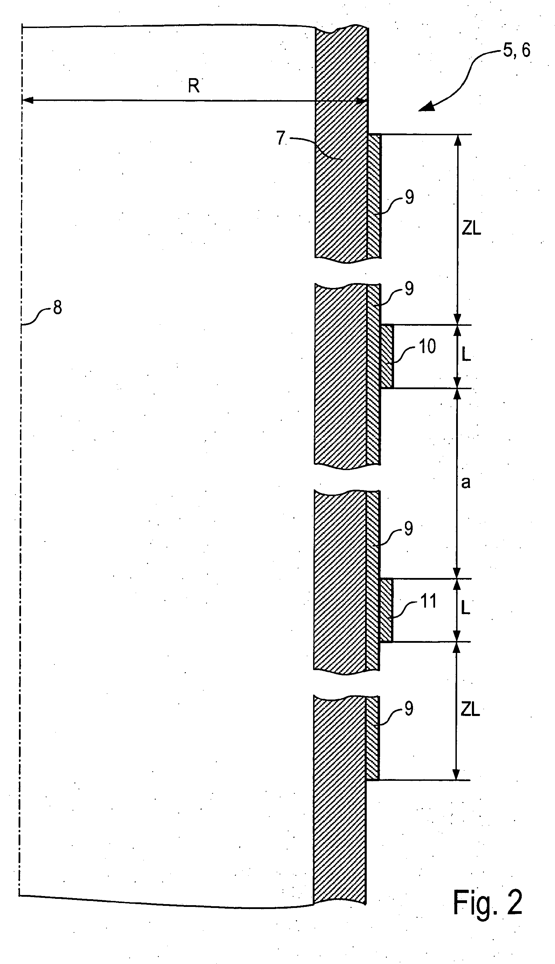

In den beiden Bohrlöchern 1, 2 ist jeweils eine Bohrlochverrohrung 5 bzw. 6 fest einzementiert, wobei der Aufbau der beiden Bohrlochverrohrungen 5, 6 in Figur 2 detailliert dargestellt ist und nachfolgend beschrieben wird.

Die Bohrlochverrohrungen 5, 6 weisen jeweils ein herkömmliches Stahlrohr 7 mit einem Radius R von beispielsweise R = 4 Zoll (10,16 cm) auf, wobei das Stahlrohr 7 bezüglich einer Symmetrieachse 8 symmetrisch ist und einen kreisförmigen Querschnitt aufweist.

Auf die äußere Mantelfläche des Stahlrohrs 7 ist eine in Längsrichtung des Stahlrohrs 7 durchgehende Isolationsschicht 9 aufgebracht, wobei die Isolationsschicht 9 in diesem Beispiel aus dem Material Ryt-Wrap® der Firma Vetco besteht. Die Isolationsschicht 9 ist deshalb mechanisch hochbelastbar und haftet gut an dem Stahlrohr 7.

Auf die Isolationsschicht 9 sind außen mehrere Tomographieelektroden 10, 11 aufgebracht, wobei die Tomographieelektroden 10, 11 wahlweise zur Einspeisung eines Stroms in das Erdreich 3 oder zur Messung des durch die Stromeinspeisung erzeugten elektrischen Potenzials dienen. In der Zeichnung sind zur Vereinfachung nur die beiden Tomographieelektroden 10, 11 dargestellt, jedoch weist die Tomographieanordnung in der Praxis zahlreiche weitere Tomographieelektroden auf, die in Längsrichtung des Stahlrohrs 7 verteilt angeordnet sind und sich deshalb im montierten Zustand in verschiedenen Bohrlochtiefen befinden, wobei die benachbarten Tomographieelektroden 10, 11 beispielsweise in einem Abstand a = 10 m angeordnet sind.

Die Isolationsschicht 9 erstreckt sich nach oben hin über die oberste Tomographieelektrode 10 hinaus, wobei die Isolationsschicht 9 eine Überdeckung ZL = 20 m aufweist. In gleicher Weise erstreckt sich die Isolationsschicht 9 nach unten hin mit einer Überdeckung ZL = 20 m über die unterste Tomographieelektrode 11 hinaus. Die Überdeckung ZL der Isolationsschicht 9 in vertikaler Richtung ist also gleich dem doppelten Elektrodenabstand a. Untersuchungen haben ergeben, dass diese Überdeckung ZL der Isolationsschicht 9 für eine gute Isolierung praktikabel ist.

Die Erfindung ist nicht auf das vorstehend beschrieben bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Bohrloch
- 2: Bohrloch
- 3: Untergrund
- 4: Speicher
- 5: Bohrlochverrohrung
- 6: Bohrlochverrohrung
- 7: Stahlrohr
- 8: Symmetrieachse
- 9: Isolationsschicht
- 10: Tomographieelektroden
- 11: Tomographieelektroden

## Patentansprüche

1. Tomographieanordnung zur elektrischen Widerstandstomographie in einem Bohrloch (1, 2), mit
a) einer Bohrlochverrohrung (7), die aus einem elektrisch leitenden Material besteht und zur Auskleidung des Bohrlochs (1, 2) dient,
**gekennzeichnet durch**
b) mehrere Tomographieelektroden (10, 11) zur Stromeinspeisung in die Bohrlochumgebung oder zur Spannungsmessung aus der Bohrlochumgebung, wobei die Tomographieelektroden (10, 11) an der Bohrlochverrohrung (7) angebracht sind,
c) eine Isolationsschicht (9), die auf die Bohrlochverrohrung (7) aufgebracht ist und die Bohrlochverrohrung (7) elektrisch gegenüber den Tomographieelektroden (10, 11) isoliert.

2. Tomographieanordnung nach Anspruch 1, **dadurch gekennzeichnet, dass** die Tomographieelektroden (10, 11) und die Isolationsschicht (9) an der Außenseite der Bohrlochverrohrung (7) angeordnet sind.

3. Tomographieanordnung nach einem der vorhergehenden Ansprüche, **dadurch gekennzeichnet,**
a) **dass** die Tomographieelektroden (10, 11) in Längsrichtung der Bohrlochverrohrung (7) verteilt an unterschiedlichen Stellen angeordnet sind, die unterschiedlichen Bohrlochtiefen entsprechen,
b) **dass** die benachbarten Tomographieelektroden (10, 11) in Längsrichtung der Bohrlochverrohrung (7) einen vorgegebenen Elektrodenabstand (a) zueinander aufweisen, und
c) **dass** sich die Isolationsschicht (9) zumindest von der obersten Tomographieelektrode (10) bis zu der untersten Tomographieelektrode (11) erstreckt.

4. Tomographieanordnung nach Anspruch 3, **dadurch gekennzeichnet,**
a) **dass** sich die Isolationsschicht (9) nach oben hin mindestens um eine vorgegebenen Zusatzlänge (ZL) bis über die oberste Tomographieelektrode (10) erstreckt und/oder
b) **dass** sich die Isolationsschicht (9) nach unten hin mindestens um eine vorgegebene Zusatzlänge (ZL) bis unter die unterste Tomographieelektrode (11) erstreckt.

5. Tomographieanordnung nach Anspruch 4, **dadurch gekennzeichnet, dass** die Zusatzlänge (ZL) im Wesentlichen gleich dem doppelten Elektrodenabstand (a) ist.

6. Tomographieanordnung nach einem der vorhergehenden Ansprüche, **dadurch gekennzeichnet, dass** die Tomographieelektroden (10, 11) im Wesentlichen punktförmig sind.

7. Tomographieanordnung nach einem der vorhergehenden Ansprüche, **dadurch gekennzeichnet, dass** die Bohrlochverrohrung (7) aus Stahl besteht.

8. Tomographieanordnung nach einem der vorhergehenden Ansprüche, **dadurch gekennzeichnet, dass** die Isolationsschicht (9) mindestens teilweise aus Polyphenylensulfid besteht.

9. Tomographieanordnung nach einem der vorhergehenden Ansprüche, **dadurch gekennzeichnet, dass** die Isolationsschicht (9) eine Schichtdicke zwischen 0,5mm und 3mm aufweist.

10. Tomographieanordnung nach einem der vorhergehenden Ansprüche, **dadurch gekennzeichnet, dass** die Isolationsschicht (9) abriebfest und/oder korrosionsbeständig und/oder hitzebeständig ist.

11. Tomographieanordnung nach einem der vorhergehenden Ansprüche, **dadurch gekennzeichnet, dass** die Tomographieelektroden (10, 11) an der Bohrlochverrohrung (7) an Stellen angeordnet sind, die einer Bohrlochtiefe von mindestens 100m, 500m, 1000m oder mehreren Kilometern entsprechen.

12. Tomographieanordnung nach einem der vorhergehenden Ansprüche, **dadurch gekennzeichnet, dass** die Bohrlochverrohrung (7) in dem Bohrloch (1, 2) fest einzementiert ist.

13. Verwendung einer Tomographieanordnung nach einem der vorhergehenden Ansprüche zu einem der folgenden Zwecke:
a) Überwachung eines unterirdischen Speichers (4) im Erdreich (3) beim Einspeichern eines Fluids in das Erdreich, oder
b) Exploration von Lagerstätten von Rohstoffen, insbesondere fossiler Brennstoffe wie Erdöl oder Erdgas, oder
c) Überwachung einer EOR-Maßnahme in einem Ölfeld, insbesondere einer Dampfinjektion in das Ölfeld.

14. Verwendung nach Anspruch 13, **dadurch gekennzeichnet, dass** das eingespeicherte Fluid gasförmig, flüssig oder superkritisch ist.

15. Verwendung nach Anspruch 13 oder 14, **dadurch gekennzeichnet, dass** das eingespeicherte Fluid Kohlendioxid und/oder das aufnehmende Erdreich ein saliner Aquifer ist.

16. Verwendung nach einem der Ansprüche 13 bis 15, **dadurch gekennzeichnet, dass** in dem Erdreich vor dem Einspeichern des Fluids ein Porenfluid enthalten ist, wobei das Porenfluid einen anderen spezifischen elektrischen Widerstand aufweist als das eingespeicherte Fluid.

17. Verfahren zur Herstellung bzw. zum Betrieb einer Tomographieanordnung, insbesondere für eine Tomographieanordnung nach einem der Ansprüche 1 bis 12, mit den folgenden Schritten:
a) Bereitstellen einer Bohrlochverrohrung (7) aus einem elektrischen leitenden Material, wobei die Bohrlochverrohrung (7) zur Auskleidung eines Bohrlochs (1, 2) dient,
**gekennzeichnet durch** folgende Schritte:
b) Aufbringen einer Isolationsschicht (9) auf die Bohrlochverrohrung (7),
c) Anbringen von mehreren Tomographieelektroden (10, 11) an der Bohrlochverrohrung (7) zur Stromeinspeisung in die Bohrlochumgebung oder zur Spannungsmessung aus der Bohrlochumgebung, wobei die Isolationsschicht (9) die Tomographieelektroden (10, 11) gegenüber der Bohrlochverrohrung (7) elektrisch isoliert.

18. Verfahren nach Anspruch 17, **dadurch gekennzeichnet, dass** die Tomographieelektroden (10, 11) an der Außenseite der Bohrlochverrohrung (7) angebracht werden.

19. Verfahren nach einem der Ansprüche 17 bis 18, **dadurch gekennzeichnet,**
a) **dass** die Tomographieelektroden (10, 11) in Längsrichtung der Bohrlochverrohrung (7) verteilt an verschiedenen Stellen angebracht werden, die unterschiedlichen Bohrlochtiefen entsprechen,
b) **dass** die benachbarten Tomographieelektroden (10, 11) in einem vorgegebenen Elektrodenabstand zueinander angeordnet werden, und
c) **dass** die Isolationsschicht (9) zumindest von der obersten Tomographieelektrode bis zu der untersten Tomographieelektrode auf die Bohrlochverrohrung (7) aufgebracht wird.

20. Verfahren nach einem der Ansprüche 17 bis 19, **gekennzeichnet durch** folgenden Schritt:
Einführen der Bohrlochverrohrung (7) mit der Isolationsschicht (9) und den Tomographieelektroden (10, 11) in das Bohrloch (1, 2).

21. Verfahren nach Anspruch 20, **dadurch gekennzeichnet, dass** die Bohrlochverrohrung (7) bis in eine Bohrlochtiefe von mehr als 100m, 500m, 1000m oder mehreren Kilometern in das Bohrloch (1, 2) eingeführt wird.

22. Verfahren nach Anspruch 20 oder 21, **gekennzeichnet durch** folgenden Schritt:
Permanentes Einzementieren der Bohrlochverrohrung (7) mit der Isolationsschicht (9) und den Tomographieelektroden (10, 11) in dem Bohrloch (1, 2).

23. Verfahren nach einem der Ansprüche 14 bis 19, **gekennzeichnet durch** folgenden Schritt:
Bohren des Bohrlochs (1, 2) für die Tomographieanordnung in einem porösen Gestein.

24. Verfahren nach Anspruch 23, **gekennzeichnet durch** folgende Schritte:
a) Einspeichern eines Fluids in das poröse Gestein,
b) Beobachten der Bohrlochumgebung mittels der Tomographieanordnung vor, während und/oder nach dem Einspeichern des Fluids in das poröse Gestein.

25. Verfahren nach Anspruch 24, **dadurch gekennzeichnet, dass** das eingespeicherte Fluid gasförmig, flüssig oder superkritisch ist.

26. Verfahren nach Anspruch 24 oder 25, **dadurch gekennzeichnet, dass** das eingespeicherte Fluid Kohlendioxid und/oder das aufnehmende Erdreich ein saliner Aquifer ist.

27. Verfahren nach einem der Ansprüche 24 bis 26, **dadurch gekennzeichnet, dass** in dem Erdreich vor dem Einspeichern des Fluids ein Porenfluid enthalten ist, wobei das Porenfluid einen anderen spezifischen elektrischen Widerstand aufweist als das eingespeicherte Fluid.
